# EUROPÄISCHE PATENTANMELDUNG

(11) **EP 1 837 536 A2**
(43) Veröffentlichungstag der Anmeldung: **26.09.2007**
(21) Anmeldenummer: 07103657.8
(22) Anmeldetag: 07.03.2007
(51) Int. Cl.: F16C 19/38, F16C 33/60

(54) **Schrägrollenlager**

(30) Priorität: 21.03.2006 DE 102006012785
(71) Anmelder: Schaeffler KG, 91074 Herzogenaurach (DE)
(72) Erfinder: Oetjen, Jürgen, 91074, Herzogenaurach (DE)

(57) **Zusammenfassung**

Die Erfindung betrifft ein zweireihiges Schrägrollenlager (1) welches aus einem äußeren Lagerring (2) und einem inneren Lagerring (3) sowie aus einer Anzahl zwischen den Lagerringen (2, 3) in zwei Reihen nebeneinander angeordneter zylindrischer Wälzkörper (5, 6) besteht, die zueinander in O-Anordnung angestellt sind und auf Laufbahnen (8 ,9) abwälzen, welche unter einem Winkel (α) geneigt zu einer Lagerachse (10) verlaufen.

In erfindungsgemäßer Weise ist jede der beiden vollrollig ausgebildeten Wälzkörperreihen (5, 6) beidseitig an ihren Außenlaufbahnen (8, 9) stirnseitig durch je einen Bord (13, 14, 15, 16) geführt, wobei die außenliegenden Borde (13, 14) durch den äußeren Lagerring (2) und die innen liegende Borde (15, 16) durch einen getrennt ausgebildeten Führungsring (17) gestellt sind, der an einem radialen Ende über seine Mantelfläche durch den äußeren Lagerring (2) zentriert und am anderen radial gegenüberliegenden Ende vom inneren Lagerring (3) umfasst ist.

## Beschreibung

### Anwendungsgebiet der Erfindung

Die Erfindung betrifft ein zweireihiges Schrägrollenlager, welches aus einem äußeren Lagerring und einem inneren Lagerring sowie aus einer Anzahl zwischen den Lagerringen in zwei Reihen nebeneinander angeordneter zylindrischer Wälzkörper besteht, die zueinander in O-Anordnung angestellt sind und auf Laufbahnen abwälzen, welche unter einem Winkel geneigt zu einer Lagerachse verlaufen.

### Hintergrund der Erfindung

Ein derart gattungsgemäß ausgebildetes mehrreihiges Schrägrollenlager ist aus der DE 199 37 660 A1 vorbekannt. Wie aus Figur 1 erkennbar, besteht das zweireihige Schrägrollenlager aus einem einteiligen Innenring und einem einteiligen Außenring, die konzentrisch ineinander angeordnet sind. Der Lageraußenring ist im Längsschnitt gesehen dreieckförmig ausgebildet und weist zwei Laufbahnen auf, die unter einem Winkel α geneigt zur Lagerachse verlaufen. Der zugehörige Innenring ist mit seiner äußeren Mantelfläche der inneren Mantelfläche des Außenringes angepasst, d.h., er weist zwei Innenlaufbahnen auf, die unter dem gleichen Neigungswinkel α zur Lagerachse verlaufen. Im zwischen den beiden Lagerringen gebildeten Freiraum sind zwei Rollenkränze angeordnet, die mit ihren Mantelflächen auf den zugehörigen Laufbahnen abwälzen. Die zylindrischen Wälzkörper sind in einem Käfig untergebracht, der aus zwei Teilstücken gebildet ist, die an ihren einander zugewandten Enden formschlüssig miteinander verbunden sind, so dass ein scharnierartiger Verbundkäfig gebildet ist.

Nachteilig dabei ist, dass die Führung der zylindrischen Wälzkörper lediglich durch den Käfig, d.h., ohne Borde an den Lagerringen erfolgt. Dies hat zur Folge, dass der Käfig in aufwändiger Weise von beiden Seiten aus in das Lager eingeknüpft werden muss. Es ist weiter von Nachteil, dass aufgrund der einstückigen Ausbildung beider Lagerringe der größte Außendurchmesser des Lagerinnenringes kleiner als der kleinste Innendurchmesser des Lageraußenringes sein muss, weil ansonsten beide Lagerringe seitlich nicht ineinander geschoben werden könnten. Dies hat jedoch zur Folge, dass der Druckwinkel α begrenzt ist, was mit einer Verringerung der Aufnahme von axial wirkenden Kräften einhergeht. Schließlich ist auch von Nachteil, dass an den gegenüberliegenden axialen Enden zwischen den beiden Lagerringen ein großer Freiraum gebildet ist, der gegebenenfalls mit einer zusätzlichen Dichtung abgedichtet werden muss.

### Zusammenfassung der Erfindung

Ausgehend von den Mängeln des bekannten Standes der Technik liegt der Erfindung daher die Aufgabe zugrunde, ein gattungsgemäßes Schrägrollenlager bereit zu stellen, das einerseits eine erhöhte Tragfähigkeit sowohl in radialer als auch in axialer Richtung aufweist und das andererseits eine verbesserte Führung seiner Wälzkörper ermöglicht.

Erfindungsgemäß wird diese Aufgabe nach dem kennzeichnenden Teil von Anspruch 1 in Verbindung mit dessen Oberbegriff dadurch gelöst, dass jede der beiden vollrollig ausgebildeten Wälzkörperreihen beidseitig an ihren Außenlaufbahnen stirnseitig durch je einen Bord geführt ist, wobei die außenliegenden Borde durch den äußeren Lagerring und die innenliegende Borde durch einen getrennt ausgebildeten Führungsring gestellt sind, der an einem radialen Ende über seine Mantelfläche durch den äußeren Lagerring zentriert und am anderen radialen gegenüberliegenden Ende vom inneren Lagerring umfasst ist.

Die beiden Borde erlauben eine exakte Führung der verkippt zur Lagerachse angeordneten zylindrischen Wälzkörper. Durch den zusätzlichen Führungsring ist es möglich, auf den ansonsten notwendigen zweiten Bord pro Wälzreihe während der Fertigung des äußeren Lagerringes zu verzichten. Dabei ist von Vorteil, dass die beiden Außenlaufbahnen gemeinsam in einem Arbeitsgang präzise gefertigt werden können, beispielsweise durch Schleifen und ein anschließendes Hohnen. Ein weiterer Vorteil der erfindungsgemäßen Lösung ist deren Vollrolligkeit, die mit einer erhöhten Tragfähigkeit des Lagers sowohl in radialer als auch in axialer Richtung einhergeht.

Die in den Ansprüchen 2, 3 und 4 aufgeführten Merkmale sorgen dafür, dass eine einwandfreie Schmierung des erfindungsgemäßen Schrägrollenlagers möglich ist. Danach soll nach Anspruch 2 der Führungsring im Wesentlichen trapezförmig ausgebildet sein, nach Anspruch 3 soll seine Mantelfläche eine umlaufende Schmierrille und wenigstens eine davon abzweigende, radial verlaufende Schmiermitteldurchtrittsbohrung aufweisen, wobei er gemäß Anspruch 4 mit seinem Innendurchmesser beabstandet vom Außendurchmesser des inneren Lagerringes angeordnet ist, so dass zwischen beiden ein umlaufender Ringspalt gebildet ist.

Aus den Ansprüchen 5 und 6 geht die konkrete Ausbildung des äußeren Lagerringes hervor. Danach soll dieser einstückig ausgebildet sein und in seinem Mittelteil einen die Außenlaufbahnen tragenden dreieckförmigen Bereich aufweisen, der beidseitig von einem die Borde stellenden Bereich fortgesetzt ist. Außerdem soll der äußere Lagerring an seiner Mantelfläche wiederum eine umlaufende Schmierrille und wenigstens eine davon abzweigende, radial verlaufende Schmiermitteldurchtrittsbohrung aufweisen.

In den Ansprüchen 7 und 8 ist die konkrete Ausgestaltung des inneren Lagerringes beschrieben. Danach soll dieser zweistückig ausgebildet sein und zwei Ringhälften aufweisen, die durch ein Befestigungselement miteinander verbunden sind. Jede der beiden Ringhälften soll einen innenliegenden radial verlaufenden Teilbereich und einen außenliegenden, die Innenlaufbahn tragenden Teilbereich aufweisen und beide Ringhälften sollen spiegelbildlich zueinander angeordnet sein.

Schließlich ist nach einem letzten Merkmal gemäß Anspruch 9 vorgesehen, dass der äußere Lagerring mit seinem Innendurchmesser und der innere Lagerring mit seinem Außendurchmesser so aufeinander abgestimmt sind, dass zwischen beiden eine Spaltdichtung gebildet ist. Durch diese radiale Abstimmung beider Lagerringe entfällt der Einbau einer zusätzlichen Dichtung, die das Lager nur verteuern würde.

### Kurze Beschreibung der Zeichnungen

Weitere Merkmale der Erfindung ergeben sich aus der nachfolgenden Beschreibung und aus den Zeichnungen, in der ein Ausführungsbeispiel der Erfindung vereinfacht dargestellt ist.

Es zeigen:
- Figur 1: einen Längsschnitt durch ein erfindungsgemäß ausgestaltetes Schrägrollenlager und
- Figur 2: eine vergrößerte Darstellung des oberen Teiles von Figur 1

### Ausführliche Beschreibung der Zeichnungen

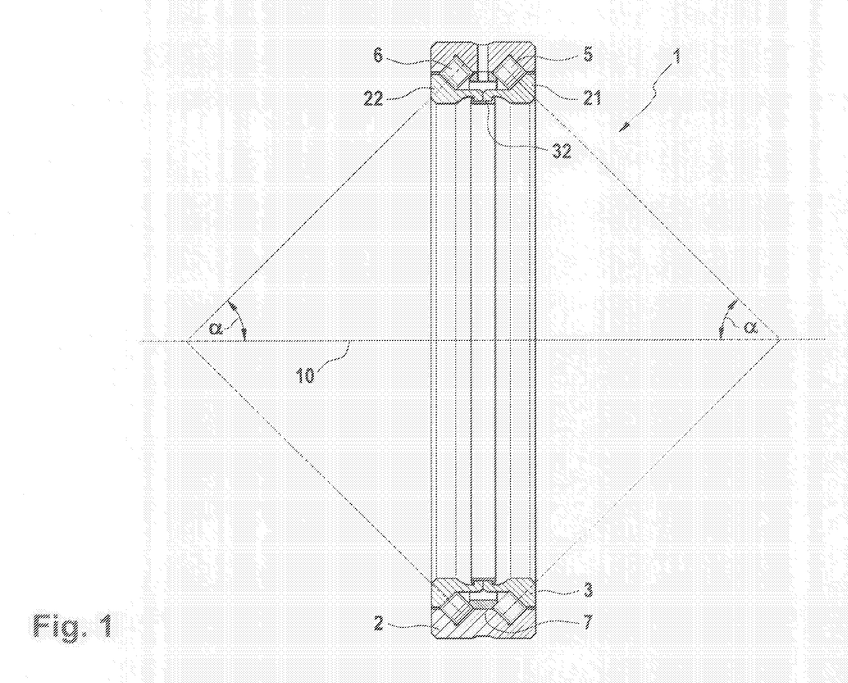

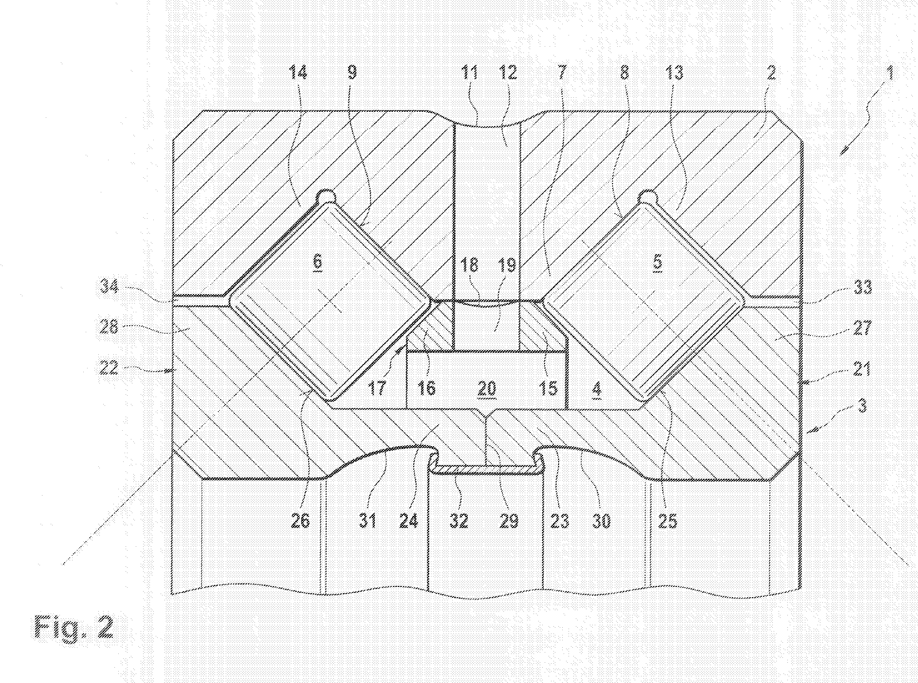

Wie aus den Figuren 1 und 2 ersichtlich, besteht das erfindungsgemäße Schrägrollenlager 1 aus dem äußeren Lagerring 2 und dem inneren Lagerring 3, die konzentrisch ineinander angeordnet sind und zwischen sich den Freiraum 4 begrenzen, in dem die zylindrischen Wälzkörper 5, 6 vollrollig, d.h., ohne Käfig angeordnet sind. Der äußere Lagerring 2 ist einstückig ausgebildet und weist in seinem Mittelteil den dreieckförmigen Bereich 7 auf, der die Außenlaufbahnen 8, 9 trägt, die unter dem Winkel α geneigt zur Lagerachse 10 angeordnet sind. Der Mittelteil des äußeren Lagerringes 2 ist an seiner Mantelfläche mit der umlaufenden Schmierrille 11 versehen, von der wenigstens eine radiale Schmiermitteldurchtrittsbohrung 12 abzweigt. Wie weiter erkennbar, sind beide Wälzkörper 5, 6 an ihren außenliegenden Stirnseiten durch einen festen Bord 13, 14 geführt, der vom äußeren Lagerring 2 gebildet ist. Beide Borde 13, 14 erstrecken sich im Ausführungsbeispiel über die gesamte Stirnfläche der zylindrischen Wälzkörper 5, 6 und sorgen so für deren exakte Führung.

Die innenliegenden Borde 15, 16 werden vom Führungsring 17 gebildet, der im Wesentlichen trapezförmig ausgestaltet ist. Wie der äußere Lagerring 2 ist auch der Führungsring 17 an seiner Mantelfläche mit einer umlaufenden Schmierrille 18 versehen, von der ebenfalls eine radiale Schmiermitteldurchtrittsbohrung 19 abzweigt. Der Führungsring 17 liegt mit seiner Mantelfläche am dreieckförmigen Bereich 7 des äußeren Lagerringes 2 an, d.h., er ist durch diesen zentriert. Der Führungsring 17, welcher ebenfalls aus einem wälzlagertauglichen Stahl gefertigt ist, kann im Lager mit Festsitz oder aber auch lose angeordnet sein. Der Führungsring 17 ist mit seinem Innendurchmesser beabstandet vom inneren Lagerring 3 angeordnet, so dass zwischen beiden ein umlaufender Ringspalt 20 gebildet ist. Auf diese Weise ist sichergestellt, dass von außen stammendes Schmiermittel über die Schmierrille 11, die Schmiermitteldurchtrittsbohrung 12 des äußeren Lagerringes 2, die Schmierrille 18, die Schmiermitteldurchtrittsbohrung 19 des Führungsringes 17 über den Ringspalt 20 in den Freiraum 4 gelangt. Von dort gelangt es an die Stirnflächen der zylindrischen Wälzkörper 5, 6 und erreicht schließlich durch die Wirkung der Fliehkraft deren Außenlaufbahnen 8, 9.

Wie weiter erkennbar, ist der innere Lagerring 3 zweistückig ausgestaltet und besteht aus den beiden Ringhälften 21, 22. Beide weisen einen in axialer Richtung innenliegenden Teilbereich 23, 24 und einen die Innenlaufbahnen 25, 26 tragenden Teilbereich 27, 28 auf. Beide Ringhälften 21, 22 sind spiegelbildlich zueinander angeordnet, d. h., die Trennfuge 29 ist mittig angeordnet. Hierbei hat es sich als vorteilhaft erwiesen, wenn die Laufbahnen 25, 26 des Innenringes 3 zunächst gemeinsam bearbeitet und erst nach deren Fertigstellung durch Sprengung die beiden Ringhälften 21, 22 hergestellt sind. An ihrer Innenfläche sind beide Ringhälften 21, 22 mit einer Auskehlung 30, 31 versehen, in die ein Befestigungselement in Form eines umlaufenden Sicherungsringes 32 eingesetzt ist, der beide Ringhälften 21, 22 zusammenhält. Wie auch erkennbar, sind die festen Borde 13, 14 des äußeren Lagerringes 2 und die Teilbereiche 27, 28 der Ringhälften 21, 22 in radialer Richtung so aufeinander abgestimmt, dass zwischen beiden eine enge Spaltdichtung 33, 34 gebildet ist, die eine zusätzliche Dichtung entbehrlich macht.

### Bezugszahlenliste

- 1: Schrägrollenlager
- 2: äußerer Lagerring
- 3: innerer Lagerring
- 4: Freiraum
- 5: zylindrischer Wälzkörper
- 6: zylindrischer Wälzkörper
- 7: dreieckförmiger Bereich
- 8: Außenlaufbahn
- 9: Außenlaufbahn
- 10: Lagerachse
- 11: Schmierrille
- 12: Schmiermitteldurchtrittsbohrung
- 13: Bord
- 14: Bord
- 15: Bord
- 16: Bord
- 17: Führungsring
- 18: Schmierrille
- 19: Schmiermitteldurchtrittsbohrung
- 20: Ringspalt
- 21: Ringhälfte
- 22: Ringhälfte
- 23: Teilbereich
- 24: Teilbereich
- 25: Innenlaufbahn
- 26: Innenlaufbahn
- 27: Teilbereich
- 28: Teilbereich
- 29: Trennfuge
- 30: Auskehlung
- 31: Auskehlung
- 32: Sicherungsring
- 33: Spaltdichtung
- 34: Spaltdichtung

## Patentansprüche

1. Zweireihiges Schrägrollenlager (1), welches aus einem äußeren Lagerring (2) und einem inneren Lagerring (3) sowie aus einer Anzahl zwischen den Lagerringen (2, 3) in zwei Reihen nebeneinander angeordneter zylindrischer Wälzkörper (5, 6) besteht, die zueinander in O-Anordnung angestellt sind und auf Laufbahnen (8, 9, 25, 26) abwälzen, welche unter einem Winkel (α) geneigt zu einer Lagerachse (10) verlaufen, **dadurch gekennzeichnet, dass** jede der beiden vollrollig ausgebildeten Wälzkörperreihen (5, 6) beidseitig an ihren Außenlaufbahnen (8, 9) stirnseitig durch je einen Bord (13, 14, 15, 16) geführt ist, wobei die außenliegenden Borde (13, 14) durch den äußeren Lagerring (2) und die innenliegenden Borde (15, 16) durch einen getrennt ausgebildeten Führungsring (17) gestellt sind, der an einem radialen Ende über seine Mantelfläche durch den äußeren Lagerring (2) zentriert und am anderen radial gegenüberliegenden Ende vom inneren Lagerring (3) umfasst ist.

2. Schrägrollenlager (1) nach Anspruch 1, **dadurch gekennzeichnet, dass** der Führungsring (17) im Wesentlichen trapezförmig ausgebildet ist.

3. Schrägrollenlager (1) nach Anspruch 2, **dadurch gekennzeichnet, dass** der Führungsring (17) an seiner Mantelfläche eine umlaufende Schmierrille (18) und wenigstens eine davon abzweigende, radial verlaufende Schmiermitteldurchtrittsbohrung (19) aufweist.

4. Schrägrollenlager (1) nach Anspruch 2, **dadurch gekennzeichnet, dass** der Führungsring (17) mit seinem Innendurchmesser beabstandet vom Außendurchmesser des inneren Lagerringes (3) angeordnet ist, so dass zwischen beiden ein umlaufender Ringspalt (20) gebildet ist.

5. Schrägrollenlager (1) nach Anspruch 1, **dadurch gekennzeichnet, dass** der äußere Lagerring (2) einstückig ausgebildet ist und in seinem Mittelteil einen die Außenlaufbahnen (8, 9) tragenden dreieckförmigen Bereich (7) aufweist, der beidseitig von einem die Borde (13, 14) stellenden Bereich fortgesetzt ist.

6. Schrägrollenlager (1) nach Anspruch 5, **dadurch gekennzeichnet, dass** der äußere Lagerring (2) an seiner Mantelfläche eine umlaufende Schmierrille (11) und wenigstens eine davon abzweigende, radial verlaufende Schmiermitteldurchtrittsbohrung (12) aufweist.

7. Schrägrollenlager (1) nach Anspruch 1, **dadurch gekennzeichnet, dass** der innere Lagerring (3) zweistückig ausgebildet ist und zwei Ringhälften (21, 22) aufweist, die durch ein Befestigungselement (32) miteinander verbunden sind.

8. Schrägrollenlager (1) nach Anspruch 7, **dadurch gekennzeichnet, dass** jede Ringhälfte (21, 22) einen innenliegenden radial verlaufenden Teilbereich (23, 24) und einen außenliegenden, die Innenlaufbahn (25, 26) tragenden Teilbereich (27, 28) aufweist und beide Ringhälften (21, 22) spiegelbildlich zueinander angeordnet sind.

9. Schrägrollenlager (1) nach einem der vorhergehenden Ansprüche, **dadurch gekennzeichnet, dass** der äußere Lagerring (2) mit seinem Innendurchmesser und der innere Lagerring (3) mit seinem Außendurchmesser so aufeinander abgestimmt sind, dass zwischen beiden eine Spaltdichtung (33, 34) gebildet ist.
